# EUROPÄISCHE PATENTSCHRIFT

(11) **EP 3 950 418 B1**
(45) Veröffentlichungstag und Bekanntmachung des Hinweises auf die Patenterteilung: **25.06.2025**
(21) Anmeldenummer: 21186418.6
(22) Anmeldetag: 19.07.2021
(51) Int. Cl.: B60N 2/20, B60N 2/22, B60N 2/30, B60N 2/32, B60N 3/00, B60N 2/60

(54) **FAHRZEUGSITZ**
VEHICLE SEAT
SIÈGE DE VÉHICULE

(30) Priorität: 07.08.2020 DE 102020120852
(43) Veröffentlichungstag der Anmeldung: 09.02.2022
(73) Patentinhaber: MAN Truck & Bus SE, 80995 München (DE)
(72) Erfinder: Schweitzer, Simon Martin Christian, 81245 München (DE); Schropp, Sven, 86316 Friedberg (DE); Gundelsheimer, Wolfram, 85757 Karlsfeld (DE)
(74) Vertreter: v. Bezold & Partner Patentanwälte - PartG mbB

(56) Entgegenhaltungen:
- EP-B1- 1 932 713
- WO-A1-2021/029840
- CN-U- 202 439 580
- DE-T5- 112011 105 252
- FR-A1- 3 008 935
- GB-A- 2 395 118
- KR-A- 20160 062 238
- KR-A- 970 036 660
- US-A- 2 963 078
- US-A1- 2005 248 200

## Beschreibung

Die Erfindung betrifft einen Fahrzeugsitz, insbesondere einen Kraftfahrzeugsitz, besonders bevorzugt einen Sitz und/oder Beifahrersitz im Führerhaus eines Nutzfahrzeuges, sowie ein Fahrzeug mit einem solchen Fahrzeugsitz.

Dokument GB 2 395 118 A offenbart eine Fahrzeugsitzanordnung, aufweisend eine geteilte Rückenlehne mit einer oberen Rückenlehnenabschnitt, der von einer normalen Sitzposition nach vorne in eine Gebrauchsposition klappbar ist. Ein Tischablagegehäuse, das an einer hinteren Fläche des oberen Rückenlehnenabschnitts befestigt ist, bildet eine Tischfläche und nimmt zwei ausziehbare Tische auf, die herausgezogen werden können, um zwei weitere Tischflächen bereitzustellen. Ein klappbares Sitzpolster ist an der Vorderseite einer Sitzbasis angeordnet und kann um 90° gedreht werden, um den oberen Rückenlehnenabschnitt durch die Kopfstütze zu stützen.

Dokument EP 1 932 713 B1 offenbart einen Mittelsitz für eine Kraftfahrzeug-Rücksitzbank, mit einem Sitzteil und einer mit dem Sitzteil verbundenen Rückenlehne, wobei die Rückenlehne in ein Oberteil und ein gelenkig mit dem Oberteil verbundenes Unterteil derart aufgeteilt ist, dass der Mittelsitz im Bereich des Oberteils vollständig von einer aufrechten Position in eine horizontale Position bewegbar ist.

Dokument US 2005/248200 A1 offenbart einen Fahrzeugsitz, umfassend einen Sitz und eine Sitzlehne mit einem unteren Abschnitt, der schwenkbar an dem Sitz über einen ersten Scharniermechanismus angebracht ist, und einen oberen Abschnitt, der schwenkbar an dem unteren Abschnitt über einen zweiten Scharniermechanismus angebracht ist.

Dokument DE 11 2011 105 252 T5 offenbart eine Fahrerkabine für einen Schwerlastkraftwagen. Eine Liege ist so angeordnet, dass sie in Längsrichtung in der Kabine in Fahrtrichtung aufzustellen ist und eine durchgehende Matratze aufweist. Die Liege weist ferner eine vertikale Verstauposition in der Nähe einer hinteren Wand der Kabine und eine aufgestellte Position auf, die sich zwischen der hinteren Wand und der Kabinenwindschutzscheibe erstreckt.

Dokument KR 970 036 660 A offenbart einen Fahrzeugsitz mit einer geteilten Rückenlehne, wobei eine obere Rückenlehne gegenüber einer unteren Rückenlehne mittels einer Neigevorrichtung umgeklappt werden kann. Eine hintere Platte der oberen Rückenlehne erstreckt sich bis zur Mitte der unteren Rückenlehne und bildet einen Tisch, wenn die obere Rückenlehne in eine horizontale Position umgeklappt ist.

Im Allgemeinen sind in einem Kraftfahrzeug mehrere Fahrzeugsitze verbaut, wobei im normalen Betrieb oft nicht alle Fahrzeugsitze besetzt und daher notwendig sind. Insbesondere in einem Nutzfahrzeug ergibt sich oft die Situation, dass sich nur der Fahrer im Fahrerhaus des Nutzfahrzeugs befindet und der Beifahrersitz unbenutzt ist. Es wäre wünschenswert, den Fahrzeugsitz, z.B. den Beifahrersitz, und/oder den Raum, der von dem Fahrzeugsitz eingenommen wird, für andere Zwecke zu verwenden und so den Innenraum des Fahrerhauses effizienter zu nutzen.

Daher besteht Bedarf für einen alternativen und/oder verbesserten Fahrzeugsitz, der für verschiedene Anwendungssituationen konfigurierbar ist, wenn dieser nicht als Sitzplatz notwendig ist.

Der Erfindung liegt somit die Aufgabe zu Grunde, einen alternativen und/oder verbesserten Fahrzeugsitz, der für verschiedene Anwendungssituationen konfigurierbar ist, bereitzustellen.

Die Aufgabe wird gelöst durch die Merkmale des Anspruchs 1. Vorteilhafte Weiterbildungen sind in den abhängigen Ansprüchen und der Beschreibung angegeben.

Gemäß einem allgemeinen Aspekt der Erfindung wird ein Fahrzeugsitz, vorzugsweise ein Kraftfahrzeugsitz, bereitgestellt. Der Fahrzeugsitz umfasst ein Sitzteil und eine Rückenlehne. Die Rückenlehne umfasst eine untere Teilrückenlehne und eine obere Teilrückenlehne, die um eine horizontale Schwenkachse schwenkbar an der unteren Teilrückenlehne angebracht ist. Die obere Teilrückenlehne ist um die horizontale erste Schwenkachse in Richtung des Sitzteils in eine horizontale Klappstellung verschwenkbar. Auf deren Rückseite (d. h. auf der Rückseite der oberen Teilrückenlehne) ist eine Gebrauchsfläche angeordnet, die in der horizontalen Klappstellung als Tisch nutzbar ist.

Vorteilhaft ist der erfindungsmäßige Fahrzeugsitz als Tisch konfigurierbar, der z. B. von den Passagieren während Fahrpausen verwendet werden kann. Diese Konfigurierbarkeit ist insbesondere für Nutzfahrzeuge von Vorteil, da es bei Nutzfahrzeugen üblich ist, das Fahrerhaus während Fahrpausen und Ruhepausen als Wohn- und Schlafraum zu nutzen. Durch den erfindungsgemäßen Fahrzeugsitz kann der Raum innerhalb des Fahrerhauses vom Fahrer effizienter als Wohnraum genutzt werden, da keine zusätzliche Installation eines Tisches notwendig ist, sondern der ohnehin nicht genutzte Fahrzeugsitz, insbesondere ein Beifahrersitz, entsprechend als Tisch genutzt werden kann.

Die obere Teilrückenlehne kann ein vom Sitzteil abgewandter Abschnitt der Rückenlehne sein.

Die horizontale erste Schwenkachse kann eine Rückenlehnenquerachse oder parallel zur Rückenlehnenquerachse sein. In einem eingebauten Zustand des Fahrzeugsitzes in einem Fahrzeug kann die horizontale erste Schwenkachse vorzugsweise in Querrichtung des Fahrzeugs verlaufen. Die horizontale erste Schwenkachse kann vorzugsweise quer zu einer Blickrichtung eines Fahrers bzw. Mitfahrers in einer normalen Sitzposition auf dem Fahrzeugsitz verlaufen.

Die Ausrichtung der horizontalen Klappstellung der oberen Teilrückenlehne bezieht sich z. B. auf eine Vorderseite oder Rückseite der oberen Teilrückenlehne. In einer Normalstellung der oberen Teilrückenlehne ist diese in etwa vertikal ausgerichtet bzw. weist eine Neigung relativ zum Sitzteil auf, sodass sich der Fahrer bzw. Mitfahrer in der normalen und aufrechten Sitzposition mit seinem Rücken auf der Vorderseite der oberen Teilrückenlehne anlehnen kann. In der horizontalen Klappstellung ist die Vorderseite und die Rückseite horizontal ausgerichtet.

Erfindungsgemäß ist die Gebrauchsfläche durch eine an der Rückseite der oberen Teilrückenlehne angebrachte Abdeckung, vorzugsweise eine Kunststoffabdeckung oder Platte, gebildet. Vorteilhaft kann die Gebrauchsfläche mittels einer solchen Abdeckung auf einfache und effiziente Weise umgesetzt werden, wobei neben der Abdeckung und entsprechender Befestigungsmittel keine zusätzlichen, insbesondere verschleißanfälligen, Komponenten notwendig sind.

Gemäß einer bevorzugten Variante kann die Abdeckung die Rückseite der oberen Teilrückenlehne vollständig abdecken, was die verfügbare Tischfläche vergrößert. Alternativ oder ergänzend kann die Abdeckung eine Umfangskontur aufweisen, die formkorrespondierend zur Umfangskontur der oberen Teilrückenlehne ausgeführt ist. Ferner alternativ oder ergänzend kann die Abdeckung eine Erhebung entlang eines Umfangs der Abdeckung zur Ausbildung einer Kante aufweisen. Durch die Ausbildung der Kante kann ein Herunterrutschen von auf der Gebrauchsfläche abgelegten Gegenständen vermieden oder zumindest erschwert werden.

Gemäß einer weiteren Ausführungsform kann sich die obere Teilrückenlehne in einem oberen Endbereich zur Ausbildung einer Kopfstütze verjüngen. Die Abdeckung kann sich bis in den oberen Endbereich, d.h. bis zur Kopfstütze, erstrecken und in dem oberen Endbereich optional ferner eine Vertiefung, vorzugsweise zylinderförmige Vertiefung, zur Ausbildung einer Getränkeflaschenhalterung aufweisen. Vorteilhaft kann somit auch die Rückseite der Kopfstütze als Gebrauchsfläche benutzt werden.

Erfindungsgemäß umfasst die Abdeckung mindestens einen Abdeckungsabschnitt, der mindestens eine Seitenfläche der oberen Teilrückenlehne und ein oberes Beschlagsystem, mittels dessen die obere Teilrückenlehne verschwenkbar an der unteren Teilrückenlehne angebracht ist, zumindest teilweise abdeckt.

Der mindestens eine Abdeckungsabschnitt kann ausgebildet sein, die mindestens eine Seitenfläche der oberen Teilrückenlehne und das obere Beschlagsystem in jeder Stellung der oberen Teilrückenlehne zumindest teilweise abzudecken.

Die Abdeckung kann die Rückseite der oberen Teilrückenlehne an einem Endbereich, an dem das obere Schlagsystem angeordnet ist, überragen.

Die Abdeckung kann abnehmbar, z. B. als ein Adapter, ausgebildet sein. Anstelle der Abdeckung kann z. B. auch ein Adapter für die Befestigung von Gepäckstücken oder anderen Utensilien montiert werden.

Gemäß einer weiteren Ausführungsform kann die Gebrauchsfläche durch eine an der Rückseite der oberen Teilrückenlehne angebrachte Platte gebildet sein.

Die Gebrauchsfläche kann durch eine an der Rückseite der oberen Teilrückenlehne gehalterte, aufklappbare Platte gebildet sein. Die aufklappbare Platte kann mindestens zwei zueinander verschwenkbare Teilplatten aufweisen, die einem zusammengeklappten Zustand einen Stapel der Teilplatten bilden, der durch ein Gelenk und eine lösbare Verriegelungsvorrichtung an der oberen Teilrückenlehne fixierbar ist und/oder lösbar fixiert ist. Das Gelenk und die lösbare Verriegelungsvorrichtung können an gegenüberliegenden Seiten des Stapels angeordnet sein.

Vorteilhaft kann somit eine Platte bereitgestellt werden, die im aufgeklappten Zustand eine Gebrauchsfläche mit größerer Fläche als die Rückseite der oberen Teilrückenlehne aufweist, also über zumindest ein Endbereich der Rückseite, vorzugsweise der Endbereich, an dem die Kopfstütze ausgebildet ist, hinausragen kann. Die aufklappbare Platte kann beispielsweise rechteckig ausgebildet sein.

Aus dem Stand der Technik sind bereits zahlreiche Verriegelungsmechanismen bekannt, die für die lösbare Verriegelungsvorrichtung umgesetzt werden können. Lediglich beispielhaft kann die lösbare Verlegungsvorrichtung ein drehbarer Haken sein, der an der Rückseite der oberen Teilrückenlehne derart befestigt ist, dass der Stapel der Teilplatten zwischen dem Haken und der oberen Teilrückenlehne eingeklemmt und so fixiert werden kann.

Die Verriegelungsvorrichtung kann die aufklappbare Platte im zusammengeklappten Zustand statisch bestimmt bzw. statisch überbestimmt sichern im Vergleich zum ausgeklappten Zustand.

Eine schwenkbare Verbindung zwischen zwei Teilplatten kann so ausgebildet sein, dass die zwei Teilplatten arretiert sind, wenn diese fluchtend zueinander angeordnet sind.

Gemäß einer Variante kann eine erste Teilplatte der Teilplatten einen Überstand aufweisen, der mit dem Gelenk verbunden ist. Ferner kann die erste Teilplatte im zusammengeklappten Zustand an einer der Rückseite des oberen Rückenlehnenteils abgewandten Seite des Stapels angeordnet sein.

Vorteilhaft kann so sichergestellt werden, dass der Stapel der Teilplatten durch das Gelenk auf der einen Seite und das lösbare Verriegelungsvorrichtung auf der anderen Seite des Stapels sicher fixiert ist. Ferner stellt das Gelenk sicher, dass die Teilplatten auch bei gelöster Verriegelungsvorrichtung immer zumindest einseitig an der Rückseite des oberen Rückenlehnenteils verbunden sind.

Die Teilplatten können identisch oder ähnlich ausgebildet sein, mit der Ausnahme, dass die erste Teilplatte zusätzlich den Überstand aufweist.

Der Überstand kann derart ausgebildet sein, dass dieser an einer Seitenfläche der oberen Teilrückenlehne anliegt, wenn die erste Teilplatte senkrecht zur oberen Teilrückenlehne ausgelenkt ist.

Gemäß einer weiteren Variante kann am oberen Endbereich der Rückseite der oberen Teilrückenlehne ein erstes Halteelement angeordnet sein. Das erste Halteelement kann ausgebildet sein, mit einem an einer ausgeklappten Teilpatte rückseitig zur Gebrauchsfläche angeordneten zweiten Halteelement zusammenzuwirken, um die ausgeklappte Teilplatte an der Rückseite der oberen Teilrückenlehne zu fixieren.

Vorteilhaft kann die Stabilität der aufgeklappten Platte bei der Nutzung als Gebrauchsfläche gewährleistet und z. B. ein ungewolltes Hin- und Herbewegen der Platte vermieden werden.

Das erste und zweite Halteelement und/oder das Gelenk können so ausgebildet sein, dass, wenn die ausgeklappte Teilplatte an der Rückseite der oberen Teilrückenlehne fixiert ist, die Gebrauchsfläche parallel zur Rückseite der oberen Teilrückenlehne ausgerichtet ist.

Gemäß einer weiteren Ausführungsform kann der Fahrzeugsitz ferner einen Unterbau, der vorzugsweise als Konsole oder kastenförmig ausgebildet ist, umfassen, an dem die untere Teilrückenlehne neigungsverstellbar gehaltert ist. Die untere Teilrückenlehne kann am Unterbau mittels eines unteren Beschlagsystems neigungsverstellbar gehaltert sein. Die obere Teilrückenlehne kann mittels eines oberen Beschlagsystem verschwenkbar an der unteren Teilrückenlehne angebracht sein.

Das obere und untere Beschlagsystem können durch aus dem Stand der Technik bekannte Beschlagsysteme ausgebildet sein. Das obere Beschlagsystem kann zwei Beschläge aufweisen, die entlang der horizontalen ersten Schwenkachse auf zwei gegenüberliegenden Seiten der oberen Teilrückenlehne angeordnet sind. Das untere Beschlagsystem kann zwei Beschläge aufweisen, die entlang einer parallel zur horizontalen ersten Schwenkachse ausgebildeten Schwenkachse auf zwei gegenüberliegenden Seiten der unteren Teilrückenlehne angeordnet sind.

Gemäß einer weiteren Variante kann das untere Beschlagsystem und das obere Beschlagsystem jeweils einen Anschlag aufweisen, der jeweils eine maximale Verschwenkstellung festlegt. Die Anschläge können jeweils so festgelegt sein, dass sich bei maximaler Verschwenkstellung der unteren Teilrückenlehne und der oberen Teilrückenlehne die obere Teilrückenlehne in der horizontalen Klappstellung befindet.

Vorteilhaft kann die obere Teilrückenlehne durch einfache Handgriffe und ohne, dass die Neigungen beider Teilrückenlehnen langwierig verstellt werden müssen, in die horizontalen Klappstellung überführt werden, indem die untere und obere Teilrückenlehne jeweils einfach bis zum jeweiligen Anschlag verschwenkt werden.

Alternativ kann die Verschwenkstellung der unteren Teilrückenlehne und/oder oberen Teilrückenlehne derart variabel einstellbar sein, z. B. durch Auslegung der Beschläge und der möglichen Verschwenkwinkel, dass die obere Teilrückenlehne immer horizontal ausgerichtet werden kann, unabhängig von der Lage des Fahrzeugs oder des Fahrerhauses.

Gemäß einer weiteren Ausführungsvariante können die untere Teilrückenlehne und/oder obere Teilrückenlehne stufenlos verschwenkbar ausgeführt sein, oder gerastert, beispielsweise mittels eines Recliners, verschwenkbar ausgeführt sein, oder elektro-motorisch verschwenkbar ausgeführt sein.

Gemäß einer weiteren Ausführungsform kann das Sitzteil um eine horizontale Schwenkachse, nachfolgend als horizontale zweite Schwenkachse bezeichnet, zwischen einer horizontalen Normalstellung und einer nicht-horizontalen, vorzugsweise vertikalen, Klappstellung verschwenkbar sein.

In einer weiteren Variante können das Sitzteil und die Teilrückenlehne so dimensioniert sein und/oder die erste und zweite Schwenkachse so angeordnet sein, dass wenn sich die obere Teilrückenlehne in der horizontalen Klappstellung und das Sitzteil in dessen Klappstellung befinden, die obere Teilrückenlehne das Sitzteil überragt und/oder auf dem Sitzteil aufliegt. Vorteilhaft kann das Sitzteil als zusätzliche Stütze der oberen Teilrückenlehne und damit der Gebrauchsfläche dienen und somit zu einer zusätzlichen Stabilität der Gebrauchsfläche bei der Nutzung als Tisch dienen.

Die horizontale zweite Schwenkachse kann parallel zur Rückenlehnenquerachse sein. In einem eingebauten Zustand des Fahrzeugsitzes in einem Fahrzeug kann die horizontale zweite Schwenkachse vorzugsweise in Querrichtung des Fahrzeugs verlaufen. Die horizontale zweite Schwenkachse kann vorzugsweise quer zu einer Blickrichtung eines Fahrers bzw. Mitfahrers in einer normalen Sitzposition auf dem Fahrzeugsitz verlaufen.

Die Ausrichtung der horizontalen Normalstellung und der nicht-horizontalen Klappstellung des Sitzteils bezieht sich z. B. auf eine Sitzfläche des Sitzteils. In der horizontalen Normalstellung ist die Sitzfläche horizontal ausgerichtet, auf der der Fahrer bzw. Mitfahrer die normale Sitzposition einnehmen kann. In der vertikalen Klappstellung ist die Sitzfläche vertikal ausgerichtet.

Gemäß einer weiteren Ausführungsvariante kann das Sitzteil auf dem Unterbau mittels einer Schwenkverbindung um die horizontale zweite Schwenkachse schwenkbar gehaltert sein. Der Unterbau kann einen zum Sitzteil hin offenen Hohlraum ausbilden. Die Schwenkverbindung kann beabstandet zu einem Endbereich des Sitzteils, der der unteren Teilrückenlehne in der horizontalen Normalstellung zugewandt ist, angeordnet sein, so dass beim Verschwenken des Sitzteils von der horizontalen Normalstellung in dessen Klappstellung dieser Endbereich in den Hohlraum des Unterbaus eintauchen kann.

Vorteilhaft kann die Position der Schwenkverbindung so gewählt sein, dass, wenn sich die obere Teilrückenlehne in der horizontalen Klappstellung und das Sitzteil in dessen Klappstellung befinden, die obere Teilrückenlehne auf dem Sitzteil aufliegen kann.

Die Schwenkverbindung kann - in Längsrichtung des Fahrzeugs gesehen - an einem mittleren Bereich des Unterbaus angeordnet sein.

Gemäß einer weiteren Variante kann eine Breite des Sitzteils in dem Endbereich, der in der horizontalen Normalstellung zwischen der horizontalen zweiten Schwenkachse und der unteren Teilrückenlehne liegt, kleiner sein als eine Breite des Sitzteils in einem Vorderbereich. Die Breite des Vorderbereichs kann größer und die Breite des Endbereichs kann kleiner als eine Breite des Hohlraums des Unterbaus sein.

Vorteilhaft kann der Vorderbereich des Sitzteils in der horizontalen Normalstellung auf dem Unterbau aufliegen und damit eine entsprechende Stabilität der Sitzfläche erzielen, insbesondere, wenn sich der Fahrer bzw. Mitfahrer auf den Fahrzeugsitz sitzt. Gleichzeitig ermöglicht der Endbereich das Eintauchen in den Unterbau.

Gemäß einer weiteren Ausführungsvariante kann der Fahrzeugsitz ferner eine Arretiervorrichtung zur lösbaren Arretierung des Sitzteils in der Klappstellung umfassen. Vorteilhaft kann eine Stabilität des Fahrzeugsitzes mit Sitzteil und oberer Teilrückenlehne in jeweiliger Klappstellung erzielt und ein unbeabsichtigtes Zurückschwenken des Sitzteils in die horizontale Normalstellung verhindert werden.

Die Arretiervorrichtung kann als Klemmvorrichtung ausgeführt sein, aufweisend eine im Unterbau angeordnete Aufnahme oder Klemme zur Aufnahme eines oder einer an der Unterseite des Sitzteils angeordneten Klemmteils oder Aufnahme. Zur Ausbildung der Arretiervorrichtung im Unterbau kann eine Klemme und/oder Aufnahme so positioniert sein, dass beim Verschwenken des Sitzteils von der horizontalen Normalstellung in dessen Klappstellung der in den Hohlraum eintauchende Endbereich des Sitzteils an der Klemme und/oder Aufnahme arretiert wird, vorzugsweise in dem ein Rohrabschnitt eines Traggestells des Sitzteils an der Klemme und/oder Aufnahme arretiert werden kann.

Vorteilhaft ist keine zusätzliche Vorrichtung am Sitzteil zu Arretierung notwendig.

Gemäß einer weiteren Variante kann der Fahrzeugsitz unterseitig entlang einer Schienenanordnung horizontal verschiebbar angeordnet oder anordbar sein. Vorzugsweise kann der Fahrzeugsitz entlang der Schienenanordnung in Längsrichtung der Schienenanordnung verschoben werden. Im eingebauten Zustand des Fahrzeugsitzes kann die Längsrichtung der Schienenanordnung die Längsrichtung des Fahrzeugs sein. Die Schienenanordnung kann mindestens eine Bodenschiene und eine gegenüber dieser Bodenschiene in Längsrichtung verschiebbare Sitzschiene umfassen.

Alternativ oder ergänzend kann der Fahrzeugsitz auf einer Dreheinrichtung, vorzugsweise einer drehtellerartigen Dreheinrichtung, gelagert sein, mittels derer der Fahrzeugsitz um eine vertikale Drehachse verschwenkbar ist.

Gemäß einer weiteren Ausführungsform kann das Sitzteil einen Sitzpolsterträger und ein auf dem Sitzpolsterträger angeordnetes Sitzpolster umfassen. Alternativ oder ergänzend kann die obere Teilrückenlehne einen oberen Rückenpolsterträger und ein auf dem oberen Rückenpolsterträger angeordnetes oberes Rückenpolster umfassen. Alternativ oder ergänzend kann die untere Teilrückenlehne einen unteren Rückenpolsterträger und ein auf dem unteren Rückenpolsterträger angeordnetes unteres Rückenpolster umfassen.

Gemäß einer weiteren Ausführungsform kann der Fahrzeugsitz ein Beifahrersitz für ein Fahrerhaus eines Nutzfahrzeugs sein.

Gemäß einem weiteren allgemeinen Aspekt der Erfindung wird ein Fahrzeug, vorzugsweise ein Nutzfahrzeug, mit einem Fahrzeugsitz wie hierin offenbart bereitgestellt. Ein Nutzfahrzeug ist ein Fahrzeug, das durch seine Bauart und Einrichtung zur Beförderung von Personen, zum Transport von Gütern oder zum Ziehen von Anhängerfahrzeugen ausgelegt ist. So kann das Fahrzeug z. B. ein Lastkraftwagen, ein Sattelzug und/oder ein Omnibus sein.

Die zuvor beschriebenen Ausführungsformen, Varianten und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1A: eine erste schematische Schrägansicht eines erfindungsgemäßen Fahrzeugsitzes gemäß einer ersten Ausführungsform in einer Sitzkonfiguration;
- Figur 1B: eine zweite schematische Schrägansicht des erfindungsgemäßen Fahrzeugsitzes gemäß Figur 1A;
- Figur 2A: eine schematische Schrägansicht des erfindungsgemäßen Fahrzeugsitzes gemäß der ersten Ausführungsform mit oberer Teilrückenlehne in horizontaler Klappstellung;
- Figur 2B: eine schematische Seitenansicht des erfindungsgemäßen Fahrzeugsitzes gemäß Figur 2A;
- Figur 3A: eine erste schematische Schrägansicht des Fahrzeugsitzes gemäß einer zweiten Ausführungsform, die nicht Teil der Erfindung ist, in einer Sitzkonfiguration;
- Figur 3B: eine zweite schematische Schrägansicht des Fahrzeugsitzes gemäß Figur 3A;
- Figur 4A: eine schematische Schrägansicht des Fahrzeugsitzes gemäß der zweiten Ausführungsform mit oberer Teilrückenlehne in horizontaler Klappstellung;
- Figur 4B: eine schematische Seitenansicht des Fahrzeugsitzes gemäß Figur 4A;
- Figuren 5A, 6-9: schematische Schrägansichten des Fahrzeugsitzes der zweiten Ausführungsform mit oberer Teilrückenlehne in horizontaler Klappstellung und aufklappbarer Platte in verschiedenen Aufklappstadien;
- Figur 5B: eine schematische Schrägansicht des Fahrzeugsitzes gemäß Figur 5A mit entferntem oberen Rückenpolster; und
- Figur 10: eine schematische Seitenansicht des erfindungsgemäßen Fahrzeugsitzes gemäß einer dritten Ausführungsform mit oberer Teilrückenlehne in horizontaler Klappstellung und Sitzteil in vertikaler Klappstellung.

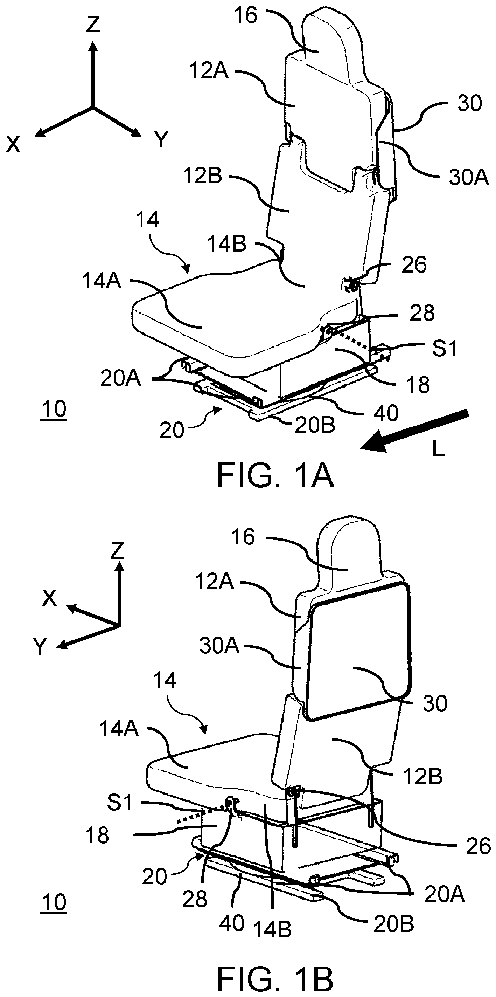

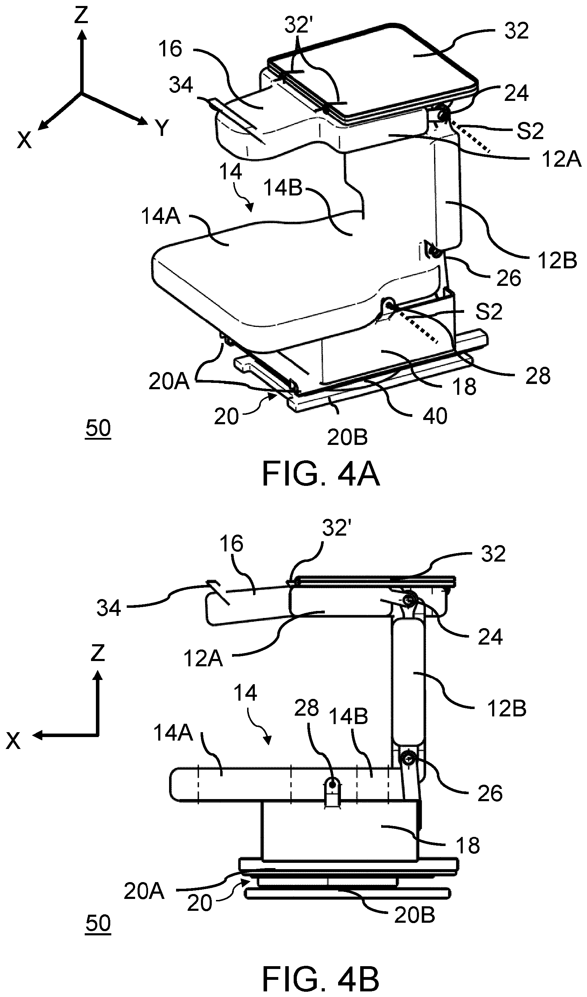

Gleiche oder funktional äquivalente Elemente sind in allen Figuren mit denselben Bezugszeichen bezeichnet und sind zum Teil nicht gesondert beschrieben. So bezeichnet beispielsweise das Bezugszeichen 14 in allen Ausführungsformen der Figuren 1-10 das Sitzteil, dass je nach Ausführungsform und Variante verschieden ausgeführt sein kann.

Die in den Figuren angegebenen Richtungen beziehen sich auf bevorzugte Fahrzeugrichtungen, wenn sich der Fahrzeugsitz 10, 50, 60 im eingebauten Zustand befindet, nämlich die Fahrzeuglängsrichtung (X-Richtung), die Fahrzeugquerrichtung (Y-Richtung) und die Fahrzeughochrichtung (Z-Richtung).

Die Figuren 1-2B zeigen den erfindungsgemäßen Fahrzeugsitz 10 gemäß einer ersten Ausführungsform.

Der Fahrzeugsitz 10 umfasst ein Sitzteil 14 und eine Rückenlehne 12.

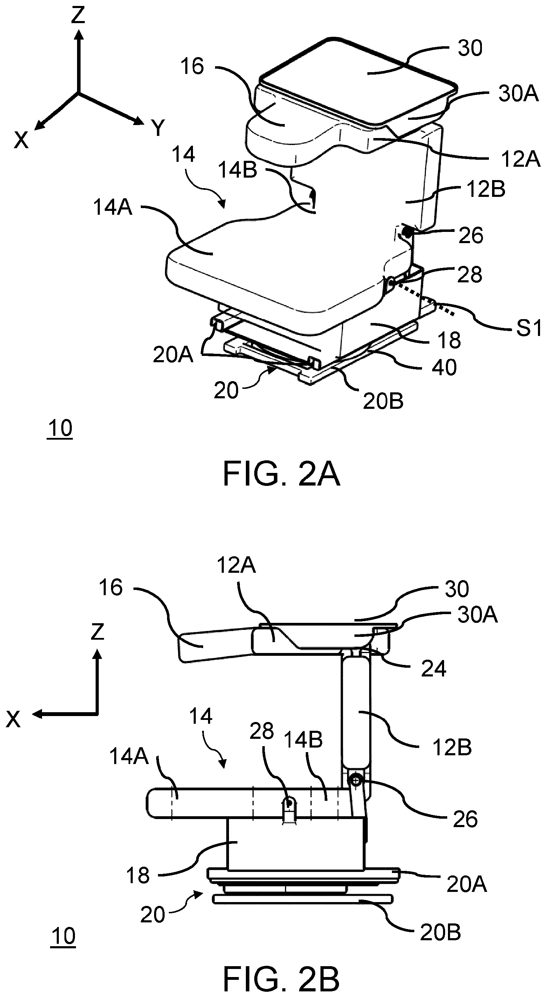

Die Rückenlehne 12 zeichnet sich dadurch aus, dass sie zwei Teilrückenlehnen umfasst: eine untere Teilrückenlehne 12B und eine um eine horizontale erste Schwenkachse S2 schwenkbar an der unteren Teilrückenlehne 12B angebrachte obere Teilrückenlehne 12A. Die obere Teilrückenlehne 12A ist aus einer - in den Figuren 1A und 1B gezeigten - normalen Sitzstellung, in der die obere Teilrückenlehne 12A in etwa vertikal ausgerichtet ist, um die horizontal erste Schwenkachse S2 in Richtung des Sitzteils 14 in eine - in den Figuren 2A und 2B gezeigten - horizontale Klappstellung verschwenkbar. Auf der Rückseite 12C der oberen Teilrückenlehne 12A ist eine Gebrauchsfläche angeordnet, die in der horizontalen Klappstellung als Tisch nutzbar ist. Die horizontale erste Schwenkachse S2 ist vorzugsweise in Y-Richtung ausgerichtet.

In der ersten Ausführungsform ist die Gebrauchsfläche durch eine an der Rückseite 12C der oberen Teilrückenlehne 12A angebrachte Abdeckung 30 gebildet. Vorzugsweise ist die Abdeckung 30 eine Kunststoffabdeckung oder Platte.

Wie in den Figuren 1-2B gezeigt, kann die Abdeckung 30 als rechteckige Platte ausgebildet sein, welche die Rückseite 12C teilweise abgedeckt. Alternativ kann die Abdeckung 30 die Rückseite 12C vollständig abdecken. Die Abdeckung 30 kann derart ausgebildet sein, dass sie eine Umfangskontur aufweist, die formkorrespondierend zur Umfangskontur der oberen Teilrückenlehne 12A ausgeführt ist, und/oder eine Erhebung entlang eines Umfangs der Abdeckung 30 zur Ausbildung einer Kante aufweist.

Die obere Teilrückenlehne 12A kann sich in einem oberen Endbereich zur Ausbildung einer Kopfstütze verjüngen. Die Abdeckung 30 kann sich bis in den oberen Endbereich erstreckenden und auch die Kopfstütze abdecken und hierbei die gleiche Umfangskontur wie die Kopfstütze aufweisen (hier nicht dargestellt) und in dem oberen Endbereich optional ferner eine Vertiefung, vorzugsweise zylinderförmige Vertiefung, zur Ausbildung einer Getränkeflaschenhalterung aufweisen.

Die Abdeckung 30, wie hier beispielhaft dargestellt, umfasst mindestens einen seitlich angeordneten Abdeckungsabschnitt 30A, der mindestens eine Seitenfläche der oberen Teilrückenlehne 12A und ein oberes Beschlagsystem 24, mittels dessen die obere Teilrückenlehne 12A verschwenkbar an der unteren Teilrückenlehne 12B angebracht ist, zumindest teilweise abdeckt. In der gezeigten Ausführungsform ist das obere Beschlagsystem 24 durch den Abdeckungsabschnitt 30A seitlich vollständig abgedeckt.

Der Fahrzeugsitz 10 kann ferner einen Unterbau 18 umfassen, der vorzugsweise als Konsole oder kastenförmig ausgebildet ist, an dem die untere Teilrückenlehne 12B neigungsverstellbar gehaltert ist. Die untere Teilrückenlehne 12B kann am Unterbau 18 mittels eines unteren Beschlagsystems 26 neigungsverstellbar gehaltert sein. Ferner kann die obere Teilrückenlehne 12A mittels eines oberen Beschlagsystem 24 verschwenkbar an der unteren Teilrückenlehne 12B angebracht sein. Das untere Beschlagsystem 26 und das obere Beschlagsystem 24 können jeweils einen Anschlag aufweisen, der jeweils eine maximale Verschwenkstellung festlegt. Die Anschläge können jeweils so festgelegt sein, dass sich bei maximaler Verschwenkstellung der unteren Teilrückenlehne 12B und der oberen Teilrückenlehne 12A die obere Teilrückenlehne 12A in der horizontalen Klappstellung befindet.

Wie z. B. in den Figuren 2A und 2B dargestellt, kann die maximale Verschwenkstellung der unteren Teilrückenlehne 12B einer vertikalen Ausrichtung der unteren Teilrückenlehne 12B entsprechen, d. h. es kann kein Neigungswinkel der unteren Teilrückenlehne 12B im Bereich von 90° in Richtung des Sitzteils 14 eingestellt werden. Ferner kann die maximale Verschwenkstellung der oberen Teilrückenlehne 12A eine relativ zur unteren Teilrückenlehne 12B senkrechten Ausrichtung entsprechen, sodass sich die obere Teilrückenlehne 12A bei maximaler Verschwenkstellung der unteren Teilrückenlehne 12B und der oberen Teilrückenlehne 12A in der horizontalen Klappstellung befindet.

Optional kann der Fahrzeugsitz 10 unterseitig entlang einer Schienenanordnung 20 horizontal verschiebbar angeordnet oder anordbar sein. Die Schienenanordnung 20 kann mindestens eine Bodenschiene 20B und eine gegenüber dieser Bodenschiene 20B in einer Längsverstellrichtung L verschiebbare Sitzschiene 20A umfassen, wobei die Bodenschiene 20B mit der Sitzschiene 20A mittels einer lösbaren Verriegelungseinrichtung lösbar verriegelt werden kann. Die in Figur 1 angegebene Längsverstellrichtung L entspricht der X-Richtung. Ferner optional kann der Fahrzeugsitz 10 unterseitig auf einer Dreheinrichtung 40 gelagert sein. Die Dreheinrichtung 40 kann als drehtellerartige Dreheinrichtung 40 ausgeführt sein, mittels derer der Fahrzeugsitz 10 um eine vertikale Drehachse verschwenkbar ist.

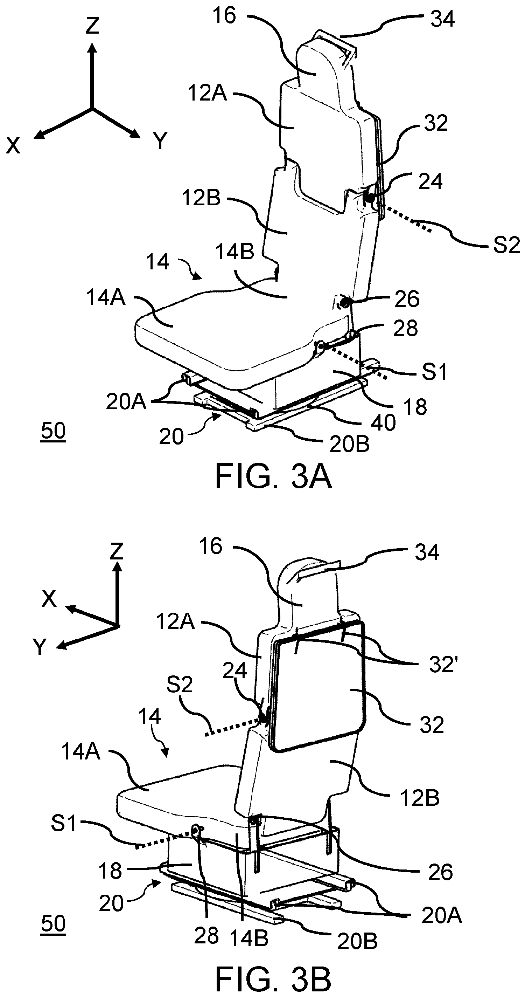

Die Figuren 3A-9 zeigen den Fahrzeugsitz 50 gemäß einer zweiten Ausführungsform, die nicht Teil der Erfindung ist. Die zweite Ausführungsform unterscheidet sich von der ersten Ausführungsform dadurch, dass die Gebrauchsfläche nicht durch die Abdeckung 30 gebildet ist, sondern durch eine an der Rückseite 12C gehalterte, aufklappbare Platte 32.

Die aufklappbare Platte 32 weist zwei zueinander verschwenkbare Teilplatten 32A, 32B auf, die in einem zusammengeklappten Zustand einen Stapel der Teilplatten 32A, 32B bilden. Der Stapel kann durch ein Gelenk 36 und eine lösbare Verriegelungsvorrichtung 38, die an gegenüberliegenden Seiten des Stapels angeordnet sind, an der oberen Teilrückenlehne 12A fixierbar werden. Die aufklappbare Platte 32 kann auch mehr als zwei zueinander verschwenkbare Teilplatten 32A, 32B aufweisen.

Eine erste Teilplatte 32B weist einen Überstand auf, der mit dem Gelenk 36 verbunden ist, und im zusammengeklappten Zustand an einer der Rückseite 12C des oberen Rückenlehnenteils 12A abgewandten Seite des Stapels angeordnet ist.

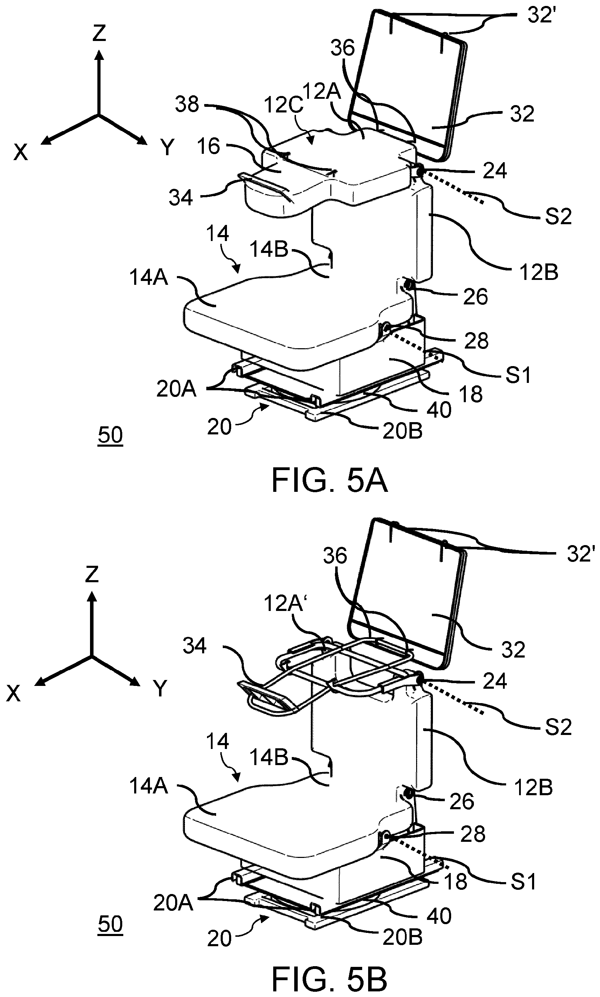

Die Figuren 5A und 6-9 illustrieren das Aufklappen der aufklappbaren Platte 32.

Zunächst wird die Verriegelungsvorrichtung 38 gelöst und der Stapel der Teilplatten 32A, 32B ausgelenkt, vorzugsweise bis der Überstand der ersten Teilplatte 32A an einer Seitenfläche der oberen Teilrückenlehne 12A anliegt und/oder der Stapel in etwa senkrecht zur Rückseite 12C des oberen Rückenlehnenteils 12A ausgelenkt ist (Figur 5A).

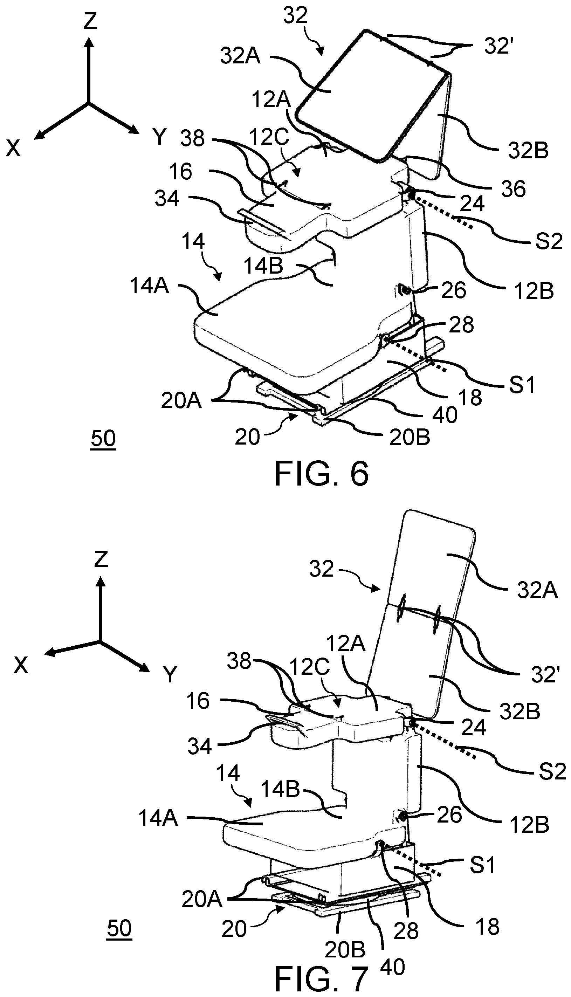

Dann wird die zweite Teilplatte 32A, welche nicht mit dem Gelenk 36 verbunden ist, ausgelenkt. Bei der zweiten Teilplatte 32A handelt es sich um die Teilplatte, die im zusammengeklappten Zustand an einer der Rückseite 12C zugewandten Seite des Stapels angeordnet ist, also im zusammengeklappten Zustand an der Rückseite 12C anliegt. Die zweite Teilplatte 32A wird in Richtung der Rückseite 12C ausgeschwenkt und soweit ausgelenkt, bis sie fluchtend zur ersten Teilplatte 32B angeordnet ist, und so die beiden Teilplatten 32A, 32B die Platte 32 ausbilden (Figuren 6 und 7). Die schwenkbare Verbindung 32' zwischen den beiden Teilplatten 32A,32B kann so ausgebildet sein, dass eine Arretierung zwischen den beiden Teilplatten 32A, 32B erfolgt, wenn diese fluchtend zueinander angeordnet sind.

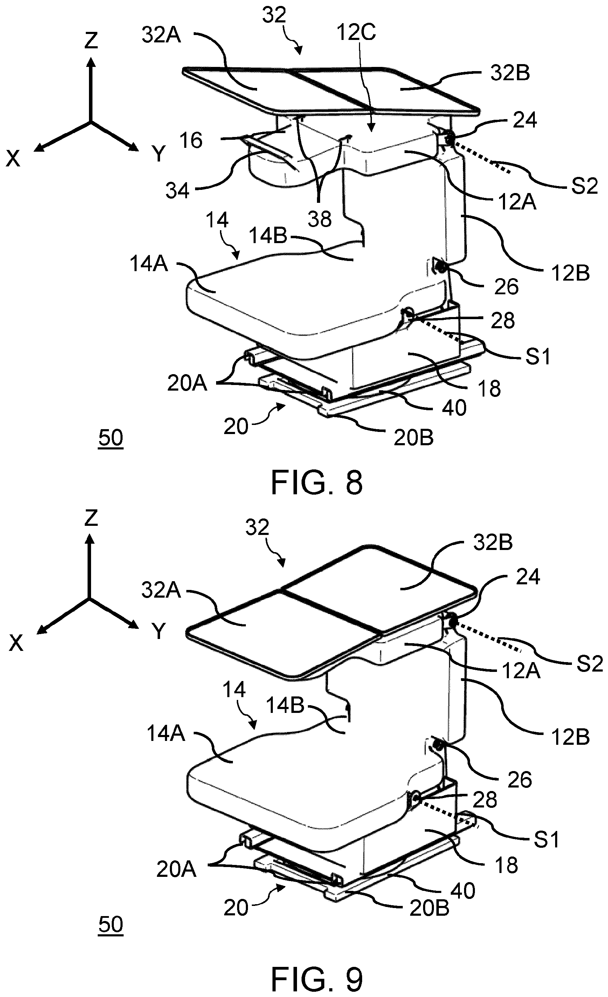

Anschließend wird die Platte 32 mittels des Gelenks 36 wieder in Richtung der Rückseite 12C zurückgelenkt, bis ein an der ausgeklappten Teilpatte 32A rückseitig zur Gebrauchsfläche angeordnetes zweites Halteelement mit einem am oberen Endbereich der Rückseite 12C angeordnetes erstes Halteelement 34 zusammenwirken kann, um die ausgeklappte Teilplatte 32A an der Rückseite 12C der oberen Teilrückenlehne 12A zu fixieren (Figuren 8 und 9).

Figur 5B zeigt den Fahrzeugsitz 50 der zweiten Ausführungsform, wobei das obere Rückenpolster entfernt ist. Wie zu erkennen ist, können das erstes Halteelement 34 und das Gelenk 36 am oberen Rückenpolsterträger 12A' bzw. als Teil des oberen Rückenpolsterträgers 12A' ausgebildet sein.

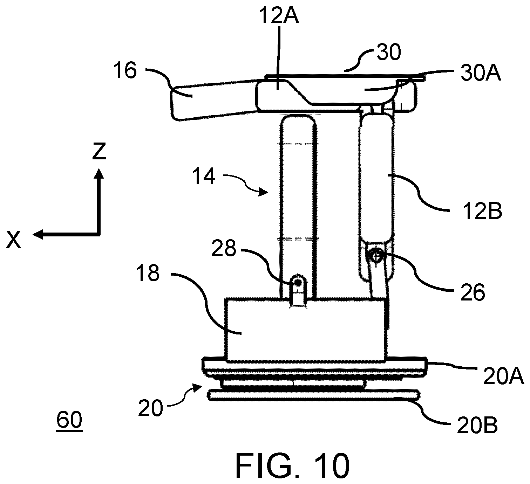

Die Figur 10 zeigt den erfindungsgemäßen Fahrzeugsitz 60 gemäß einer dritten Ausführungsform. Diese dritte Ausführungsform unterscheidet sich von der ersten Ausführungsform dadurch, dass das Sitzteil 14 um eine horizontale zweite Schwenkachse S1 zwischen einer horizontalen Normalstellung und einer nicht-horizontalen, vorzugsweise vertikalen, Klappstellung verschwenkbar ist. Die horizontale zweite Schwenkachse S1 ist vorzugsweise in Y-Richtung und parallel zur horizontalen ersten Schwenkachse S2 ausgerichtet.

Sind - wie in Figur 10 gezeigt - sowohl die obere Teilrückenlehne 12A als auch das Sitzteil 14 verschwenkt, so kann die obere Teilrückenlehne 12A das Sitzteil 14 überragen und/oder auf dem Sitzteil aufliegen.

Gemäß der dritten Ausführungsform bildet der Unterbau 18 einen zum Sitzteil 14 hin offenen Hohlraum 18A aus. Ferner ist das Sitzteil 14 auf dem Unterbau 18 mittels einer Schwenkverbindung 28 um die horizontale zweite Schwenkachse S1 schwenkbar gehaltert.

Wie zu erkennen ist, ist die Schwenkverbindung 28 beabstandet zu einem Endbereich 14B des Sitzteils 14, der der Rückenlehne 12 in der horizontalen Normalstellung zugewandt ist, angeordnet. Entsprechend kann dieser Endbereich 14B beim Verschwenken des Sitzteils 14 von der horizontalen Normalstellung in dessen Klappstellung in den Hohlraum 18A des Unterbaus 18 eintauchen.

Um dieses Eintauchen des Endbereich 14B in den Hohlraum 18A des Unterbaus 18 zu gewährleisten, kann der Unterbau 18 eine zum Sitzteil 14 hin offene Kastenform aufweisen. Ferner kann eine Breite des Sitzteils 14 in dem Endbereich 14B, der in der horizontalen Normalstellung zwischen der horizontalen zweiten Schwenkachse S1 und der Rückenlehne 12 liegt, kleiner sein als eine Breite des Sitzteils 14 in einem Vorderbereich 14A, wobei vorzugsweise die Breite des Vorderbereichs 14A größer und die Breite des Endbereichs 14B kleiner als eine Breite des Hohlraums 18A des Unterbaus 18 ist. Die jeweiligen Breiten beziehen sich hierbei auf die jeweiligen Maße in Y-Richtung.

Das Sitzteil 14 kann ferner mittels einer Arretiervorrichtung (nicht gezeigt) lösbar in der Klappstellung arretiert werden. Die Arretiervorrichtung kann z. B. als Klemmvorrichtung ausgeführt sein, aufweisend eine im Unterbau 18 angeordnete Aufnahme oder Klemme zur Aufnahme eines oder einer an der Unterseite 14C des Sitzteils 14 angeordneten Klemmteils oder Aufnahme. Dazu kann die Klemme und/oder Aufnahme im Unterbau 18 so positioniert ist, dass beim Verschwenken des Sitzteils 14 von der horizontalen Normalstellung in dessen Klappstellung der in den Hohlraum 18A eintauchende Endbereich 14B des Sitzteils 14 an der Klemme und/oder Aufnahme arretiert wird, vorzugsweise in dem ein Rohrabschnitt eines Traggestells des Sitzteils 14 an der Klemme und/oder Aufnahme arretiert wird.

Die Erfindung ist nicht auf die vorstehend beschriebenen bevorzugten Ausführungsformen beschränkt. Vielmehr ist eine Vielzahl von Varianten und Abwandlungen möglich, solange der resultierende Gegenstand zum Schutzumfang gehört, der durch die Ansprüche definiert ist.

### Bezugszeichenliste

- 10, 50, 60: Fahrzeugsitz
- 12: Rückenlehne
- 12A: Obere Teilrückenlehne
- 12B: Untere Teilrückenlehne
- 12C: Rückseite der oberen Teilrückenlehne
- 14: Sitzteil
- 14A: Vorderbereich des Sitzteils
- 14B: Endbereich des Sitzteils
- 16: Kopfstütze
- 18: Unterbau
- 20: Längsverstellvorrichtung
- 20A: Sitzschiene
- 20B: Bodenschiene
- 24: Oberes Beschlagsystem
- 26: Unteres Beschlagsystem
- 28: Schwenkverbindung
- 30: Abdeckung
- 30A: Abdeckungsabschnitt
- 32: Platte
- 32A, 32B: Teilplatte
- 32': Schwenkbare Verbindung der Teilplatten
- 34: Erstes Halteelement
- 36: Gelenk
- 38: Verriegelungsvorrichtung
- 40: Dreheinrichtung
- S1: Horizontale zweite Schwenkachse
- S2: Horizontale erste Schwenkachse
- L: Längsverstellrichtung

## Patentansprüche

1. Fahrzeugsitz (10; 60), vorzugsweise Kraftfahrzeugsitz, umfassend
a) ein Sitzteil (14), und
b) eine Rückenlehne (12), umfassend eine untere Teilrückenlehne (12B) und eine um eine horizontale erste Schwenkachse (S2) schwenkbar an der unteren Teilrückenlehne (12B) angebrachte obere Teilrückenlehne (12A), wobei die obere Teilrückenlehne (12A) um die erste Schwenkachse (S2) in Richtung des Sitzteils (14) in eine horizontale Klappstellung verschwenkbar ist und auf deren Rückseite (12C) eine Gebrauchsfläche angeordnet ist, die in der horizontalen Klappstellung als Tisch nutzbar ist, und wobei die Gebrauchsfläche durch eine an der Rückseite (12C) der oberen Teilrückenlehne (12A) angebrachte Abdeckung (30), vorzugsweise eine Kunststoffabdeckung oder Platte, gebildet ist,
**dadurch gekennzeichnet, dass**
die Abdeckung (30) mindestens einen Abdeckungsabschnitt (30A) umfasst, der mindestens eine Seitenfläche der oberen Teilrückenlehne (12A) und ein oberes Beschlagsystem (24), mittels dessen die obere Teilrückenlehne (12A) verschwenkbar an der unteren Teilrückenlehne (12B) angebracht ist, zumindest teilweise abdeckt.

2. Fahrzeugsitz (10) nach Anspruch 1, wobei die Abdeckung (30)
a) die Rückseite (12C) der oberen Teilrückenlehne (12A) vollständig abdeckt;
und/oder
b) eine Umfangskontur aufweist, die formkorrespondierend zur Umfangskontur der oberen Teilrückenlehne (12A) ausgeführt ist; und/oder
c) eine Erhebung entlang eines Umfangs der Abdeckung (30) aufweist zur Ausbildung einer Kante.

3. Fahrzeugsitz (10) nach Anspruch 1 oder 2, wobei die obere Teilrückenlehne (12A) sich in einem oberen Endbereich zur Ausbildung einer Kopfstütze (16) verjüngt und die Abdeckung (30) sich bis in den oberen Endbereich erstreckt und in dem oberen Endbereich eine Vertiefung, vorzugsweise zylinderförmige Vertiefung, zur Ausbildung einer Getränkeflaschenhalterung aufweist.

4. Fahrzeugsitz (10) nach einem der vorherigen Ansprüche, wobei die Gebrauchsfläche durch eine an der Rückseite (12C) der oberen Teilrückenlehne (12A) angebrachte Platte (32) gebildet ist.

5. Fahrzeugsitz (10; 60) nach einem der vorherigen Ansprüche, ferner umfassend einen Unterbau (18), der vorzugsweise als Konsole oder kastenförmig ausgebildet ist, an dem die untere Teilrückenlehne (12B) neigungsverstellbar gehaltert ist,
a) wobei die untere Teilrückenlehne (12B) am Unterbau (18) mittels eines unteren Beschlagsystems (26) neigungsverstellbar gehaltert ist; und
b) wobei die obere Teilrückenlehne (12A) mittels eines oberen Beschlagsystems (24) verschwenkbar an der unteren Teilrückenlehne (12B) angebracht ist.

6. Fahrzeugsitz (10; 60) nach Anspruch 5, wobei das untere und das obere Beschlagsystem (24, 26) jeweils einen Anschlag aufweisen, der jeweils eine maximale Verschwenkstellung festlegt, wobei die Anschläge vorzugsweise jeweils so festgelegt sind, dass sich bei maximaler Verschwenkstellung der unteren Teilrückenlehne (12B) und der oberen Teilrückenlehne (12A) die obere Teilrückenlehne (12A) in der horizontalen Klappstellung befindet.

7. Fahrzeugsitz (10; 60) nach Anspruch 5 oder 6, wobei die untere Teilrückenlehne (12B) und/oder obere Teilrückenlehne (12A)
a) stufenlos, oder
b) gerastert, beispielsweise mittels eines Recliners, oder
c) elektro-motorisch verschwenkbar ausgeführt sind.

8. Fahrzeugsitz (60) nach einem der vorherigen Ansprüche, wobei das Sitzteil (14) um eine horizontale zweite Schwenkachse (S1) zwischen einer horizontalen Normalstellung und einer nicht-horizontalen, vorzugsweise vertikalen, Klappstellung verschwenkbar ist; und wobei, wenn sich die obere Teilrückenlehne (12A) in der horizontalen Klappstellung und das Sitzteil (14) in dessen Klappstellung befinden, die obere Teilrückenlehne (12A) das Sitzteil (14) überragt und/oder auf dem Sitzteil (14) aufliegt.

9. Fahrzeugsitz (60) nach Anspruch 8, umfassend den Unterbau (18) gemäß Anspruch 5, wobei
a) das Sitzteil (14) auf dem Unterbau (18) mittels einer Schwenkverbindung (28) um die horizontale zweite Schwenkachse (S1) schwenkbar gehaltert ist,
b) der Unterbau (18) einen zum Sitzteil (14) hin offenen Hohlraum ausbildet, und
c) die Schwenkverbindung (28) beabstandet zu einem Endbereich (14B) des Sitzteils (14), der der unteren Teilrückenlehne (12B) in der horizontalen Normalstellung zugewandt ist, angeordnet ist, so dass beim Verschwenken des Sitzteils (14) von der horizontalen Normalstellung in dessen Klappstellung dieser Endbereich (14B) in den Hohlraum des Unterbaus (18) eintaucht.

10. Fahrzeugsitz (10; 60) nach einem der vorhergehenden Ansprüche, wobei der Fahrzeugsitz (10) unterseitig
a) entlang einer Schienenanordnung (20) horizontal verschiebbar angeordnet oder anordbar ist; und/oder
b) auf einer Dreheinrichtung (40), vorzugsweise einer drehtellerartigen Dreheinrichtung, gelagert ist, mittels derer der Fahrzeugsitz um eine vertikale Drehachse verschwenkbar ist.

11. Fahrzeugsitz (10; 60) nach einem der vorhergehenden Ansprüche, wobei der Fahrzeugsitz ein Beifahrersitz für ein Fahrerhaus eines Nutzfahrzeugs ist.

12. Fahrzeug, vorzugsweise Nutzfahrzeug, mit einem Fahrzeugsitz (10; 60) gemäß einem der vorhergehenden Ansprüche.

## Claims

1. Vehicle seat (10; 60), preferably a motor vehicle seat, comprising
a) a seat part (14), and
b) a backrest (12), comprising a lower partial backrest (12B) and an upper partial backrest (12A) pivotably arranged on the lower partial backrest (12B) about a horizontal first pivot axis (S2), wherein the upper partial backrest (12A) is pivotable about the first pivot axis (S2) in the direction of the seat part (14) into a horizontal folding position and a usable surface is arranged on the rear side (12C) thereof, which usable surface can be used as a table in the horizontal folding position, and wherein the usable surface is formed by a cover (30), preferably a plastic cover or plate, attached to the rear side (12C) of the upper partial backrest (12A),
**characterised in that**
the cover (30) comprises at least one cover section (30A) which at least partially covers at least one side surface of the upper partial backrest (12A) and an upper fitting system (24), by means of which the upper partial backrest (12A) is pivotably attached to the lower partial backrest (12B).

2. A vehicle seat (10) according to claim 1, wherein the cover (30)
a) completely covers the rear side (12C) of the upper partial backrest (12A);
and/or
b) comprises a circumferential contour which is configured to correspond in shape to the circumferential contour of the upper partial backrest (12A); and/or
c) comprises an elevation along a circumference of the cover (30) for the configuration of an edge.

3. A vehicle seat (10) according to claim 1 or 2, wherein the upper partial backrest (12A) tapers in an upper end portion to form a headrest (16) and the cover (30) extends into the upper end portion and comprises in the upper end portion a recess, preferably a cylindrical recess, for the configuration of a beverage bottle holder.

4. A vehicle seat (10) according to one of the previous claims, wherein the use surface is formed by a plate (32) attached to the rear side (12C) of the upper partial backrest (12A).

5. A vehicle seat (10; 60) according to one of the preceding claims, further comprising a substructure (18), which is preferably configured as a console or boxshaped, on which the lower partial backrest (12B) is mounted in a tilt-adjustable manner,
a) wherein the lower partial backrest (12B) is mounted on the substructure (18) in an inclination-adjustable manner by means of a lower fitting system (26); and
b) wherein the upper partial backrest (12A) is pivotably attached to the lower partial backrest (12B) by means of an upper fitting system (24).

6. Vehicle seat (10; 60) according to claim 5, wherein the lower and the upper fitting system (24, 26) each comprise a stop which in each case determines a maximum swivelling position, wherein the stops are preferably in each case determined such that when the lower partial backrest (12B) and the upper partial backrest (12A) are in the maximum swivelling position, the upper partial backrest (12A) is in the horizontal folding position.

7. Vehicle seat (10; 60) according to claim 5 or 6, wherein the lower partial backrest (12B) and/or upper partial backrest (12A) are
a) continuously variable, or
b) rastered, for example by means of a recliner, or
c) configured to be pivotable by an electric motor.

8. Vehicle seat (60) according to one of the previous claims, wherein the seat part (14) is pivotable about a horizontal second pivot axis (S1) between a horizontal normal position and a non-horizontal, preferably vertical, folding position; and wherein, when the upper partial backrest (12A) is in the horizontal folding position and the seat part (14) is in the folding position thereof, the upper partial backrest (12A) projects beyond the seat part (14) and/or rests on the seat part (14).

9. A vehicle seat (60) according to claim 8, comprising the substructure (18) according to claim 5, wherein
a) the seat part (14) is mounted on the substructure (18) so as to be pivotable about the horizontal second pivot axis (S1) by means of a pivot connection (28),
b) the substructure (18) forms a cavity which is open towards the seat part (14), and
c) the swivel connection (28) is arranged at a distance from an end portion (14B) of the seat part (14) which faces the lower partial backrest (12B) in the horizontal normal position, so that when the seat part (14) is swivelled from the horizontal normal position into its folding position, this end portion (14B) dips into the cavity of the substructure (18).

10. A vehicle seat (10; 60) according to one of the preceding claims, wherein the vehicle seat (10) on the underside
a) is arranged or can be arranged horizontally displaceably along a rail arrangement (20); and/or
b) is mounted on a rotating device (40), preferably a turntable-like rotating device, by means of which the vehicle seat can be swivelled about a vertical axis of rotation.

11. A vehicle seat (10; 60) according to one of the preceding claims, wherein the vehicle seat is a passenger seat for a driver's cab of a utility vehicle.

12. A vehicle, preferably utility vehicle, with a vehicle seat (10; 60) according to one of the preceding claims.

## Revendications

1. Siège (10 ; 60) de véhicule, de préférence siège de véhicule automobile, comprenant :
a) une partie siège (14) et
b) un dossier (12), comprenant un dossier partiel inférieur (12B) et un dossier partiel supérieur (12A) installé sur le dossier partiel inférieur (12B) de manière à pouvoir pivoter autour d'un premier axe de pivotement (S2) horizontal, le dossier partiel supérieur (12A) pouvant pivoter autour du premier axe de pivotement (S2) dans le sens vers la partie siège (14) dans une position rabattue horizontale et une surface d'utilisation étant agencée sur sa face arrière (12C), laquelle surface étant utilisable comme table dans la position rabattue horizontale, et la surface d'utilisation étant formée par un recouvrement (30), de préférence un recouvrement en matériau synthétique ou un plateau, installé sur la face arrière (12C) du dossier partiel supérieur (12A),
**caractérisé en ce que**
le recouvrement (30) comprend au moins une section (30A) de recouvrement, qui recouvre au moins partiellement au moins une surface latérale du dossier partiel supérieur (12A), et un système de ferrure supérieur (24), au moyen duquel le dossier partiel supérieur (12A) est installé de manière à pouvoir pivoter sur le dossier partiel inférieur (12B).

2. Siège (10) de véhicule selon la revendication 1, le recouvrement (30)
a) recouvrant complètement la face arrière (12C) du dossier partiel supérieur (12A) ; et/ou
b) présentant un contour périphérique qui est réalisé avec une forme correspondant à celle du contour périphérique du dossier partiel supérieur (12A) ; et/ou
c) présentant une élévation le long d'une périphérie du recouvrement (30) afin de former un bord.

3. Siège (10) de véhicule selon la revendication 1 ou 2, le dossier partiel supérieur (12A) se rétrécissant dans une zone terminale supérieure afin de former un appuie-tête (16) et le recouvrement (30) s'étendant jusque dans la zone terminale supérieure et présentant un renfoncement, de préférence un renfoncement cylindrique, dans la zone terminale supérieure afin de former un support à bouteille pour boisson.

4. Siège (10) de véhicule selon l'une des revendications précédentes, la surface d'utilisation étant formée par un plateau (32) installé sur la face arrière (12C) du dossier partiel supérieur (12A).

5. Siège (10 ; 60) de véhicule selon l'une des revendications précédentes, comprenant en outre une base (18), qui est de préférence réalisée sous forme de console ou en forme de caisse, sur laquelle le dossier partiel inférieur (12B) est maintenu avec une inclinaison réglable,
a) le dossier partiel inférieur (12B) étant maintenu sur la base (18) au moyen d'un système de ferrure inférieur (26) avec une inclinaison réglable ; et
b) le dossier partiel supérieur (12A) étant installé sur le dossier partiel inférieur (12B) de manière à pouvoir pivoter au moyen d'un système de ferrure supérieur (24).

6. Siège (10 ; 60) de véhicule selon la revendication 5, les systèmes de ferrure supérieur et inférieur (24, 26) présentant à chaque fois une butée, qui définit à chaque fois une position de pivotement maximale, les butées étant de préférence à chaque fois définies de telle sorte que dans la position de pivotement maximale du dossier partiel inférieur (12B) et du dossier partiel supérieur (12A), le dossier partiel supérieur (12A) se trouve dans la position rabattue horizontale.

7. Siège (10 ; 60) de véhicule selon la revendication 5 ou 6, le dossier partiel inférieur (12B) et/ou le dossier partiel supérieur (12A) étant réalisés de manière à pouvoir pivoter
a) de manière continue ou
b) de manière encliquetée, par exemple au moyen d'un levier d'inclinaison, ou
c) à l'aide d'un moteur électrique.

8. Siège (60) de véhicule selon l'une des revendications précédentes, la partie siège (14) pouvant pivoter autour d'un deuxième axe de pivotement (S1) horizontal entre une position normale horizontale et une position rabattue non horizontale, de préférence verticale ; et lorsque le dossier partiel supérieur (12A) se trouve dans la position rabattue horizontale et la partie siège (14) se trouve dans sa position rabattue, le dossier partiel supérieur (12A) dépassant de la partie siège (14) et/ou se plaçant sur la partie siège (14).

9. Siège (60) de véhicule selon la revendication 8, comprenant la base (18) selon la revendication 5,
a) la partie siège (14) étant maintenue sur la base (18) au moyen d'une liaison pivotante (28) de manière à pouvoir pivoter autour du deuxième axe de pivotement (S1) horizontal,
b) la base (18) formant un espace creux ouvert vers la partie siège (14) et
c) la liaison pivotante (28) étant agencée à une certaine distance d'une zone terminale (14B) de la partie siège (14), qui est orientée vers le dossier partiel inférieur (12B) dans la position normale horizontale, de telle sorte que lors du pivotement de la partie siège (14) à partir de la position normale horizontale dans sa position rabattue, cette zone terminale (14B) pénètre dans l'espace creux de la base (18).

10. Siège (10 ; 60) de véhicule selon l'une des revendications précédentes, le siège (10), au niveau de sa face inférieure,
a) étant agencé ou pouvant être agencé de manière horizontalement mobile le long d'un agencement de rail (20) ; et/ou
b) étant logé sur un dispositif rotatif (40), de préférence un dispositif rotatif de type assiette rotative, au moyen duquel le siège de voiture peut pivoter autour d'un axe de rotation vertical.

11. Siège (10 ; 60) de voiture selon l'une des revendications précédentes, le siège de voiture étant un siège de passager pour un habitable d'un véhicule utilitaire.

12. Véhicule, de préférence véhicule utilitaire, présentant un siège (10 ; 60) de véhicule selon l'une des revendications précédentes.
